(19)

Europäisches
Patentamt
European
Patent Office
Office européen
des brevets

(11) **EP 1 801 757 A1**

(12) **EUROPEAN PATENT APPLICATION**
published in accordance with Art. 158(3) EPC

(43) Date of publication:
**27.06.2007 Bulletin 2007/26**

(21) Application number: **05778592.5**

(22) Date of filing: **07.09.2005**

(51) Int Cl.:
***G06T 7/20*** (2006.01)

(86) International application number:
**PCT/JP2005/016380**

(87) International publication number:
**WO 2006/028106 (16.03.2006 Gazette 2006/11)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.09.2004 JP 2004261179**

(71) Applicant: **National Institute of Advanced Industrial Science and Technology Tokyo 100-8921 (JP)**

(72) Inventors:
• **OTSU, N.,**
  **National Inst. Advanced Industrial S & T**
  **Tsukuba-shi,**
  **Ibaraki 3058568 (JP)**
• **NANRI, T.,**
  **Graduate School Infomation S & T**
  **Tokyo 1130033 (JP)**

(74) Representative: **HOFFMANN EITLE**
  **Patent- und Rechtsanwälte**
  **Arabellastrasse 4**
  **81925 München (DE)**

(54) **ABNORMAL ACTION DETECTOR AND ABNORMAL ACTION DETECTING METHOD**

(57) An abnormal action detecting device and method for detecting an abnormal action from a moving picture. An abnormal action detecting device (11) creates from-to-frame difference data from moving picture data inputted from a video camera (10), extracts feature data from three-dimensional data composed of frame-to-frame difference data by using a stereoscopic high-order local cross-correlation, computes the distance between a partial space based on a main component vector determined by a main component analysis technique from the past feature data and the latest feature data, and judges that an action is abnormal if the distance is greater than a predetermined value. By learning a normal action as a partial space and detecting an abnormal action as a deviation from the normal one, for example, even if several persons are present in the screen, an abnormal action of a person can be detected. The computational complexity is low and the real-time processing is possible.

*Fig.1*

**Description**

TECHNICAL FIELD

The present invention relates to an abnormal action detector and an abnormal action detecting method for capturing moving images to detect unusual actions.

BACKGROUND ART

Currently, camera-based monitoring systems are often used in video monitoring in the field of security, an elderly care monitoring system, and the like. However, manual detection of abnormal actions from moving images requires much labor, and a computer substituted for the manual operation would lead to a significant reduction in labor. Also, in the elderly care, an automatic alarm system for accesses, if any, would reduce a burden on care personnel, so that camera-based monitoring systems are required for informing abnormal actions and the like.

Thus, actions must be recognized from moving images to extract action features for an object. Studies on the action recognition include, among others, Non-Patent Document 1 cited below, published by one of the inventors and one other, which discloses a technology for performing the action recognition using cubic higher-order local auto-correlation features (hereinafter called "CHLAC" as well) which are an extended version of higher-order local auto-correlation features that are effective for face image recognition and the like, and additionally include a correlation in a time direction. Specifically, the cubic higher-order local auto-correlation features can be said to be statistical features and action features which are derived by calculating local auto-correlation features at each point in voxel data (three-dimensional data) which comprises images arranged in time series, and integrating the local features over the entire voxel data. The features are analyzed for discrimination into four actions to provide a recognition result which is as high as nearly 100 %. Non-Patent Document 1: T. Kobayashi and N. Otsu, "Action and Simultaneous Multiple-Person Identification Using Cubic Higher-Order Local Auto-Correlation," Proceeding of 17th International Conference on Pattern Recognition, 2004

DISCLOSURE OF THE INVENTION

PROBLEMS TO BE SOLVED BY THE INVENTION

When an attempt is made to apply the conventional action recognition method described above to the detection of abnormal actions, feature data must have been previously generated and registered for all abnormal actions. However, abnormal actions of persons and devices are difficult to predict, leading to a problem of the inability to accurately generate feature data for all abnormal actions. It is an object of the present invention to solve such a problem and provide an abnormal action detector and an abnormal action detecting method for detecting abnormal actions using the cubic higher-order local auto-correlation features which are features extracted from moving images.

MEANS FOR SOLVING THE PROBLEM

An abnormal action detector of the present invention is mainly characterized by comprising difference data generating means for generating frame difference data from moving image data composed of a plurality of image frame data, feature data extracting means for extracting feature data from the inter-frame differential data through higher-order local auto-correlation, distance calculating means for calculating the distance between a subs pace spanned by principal component vectors derived through a principal component analysis approach from a plurality of feature data extracted in the past by said feature data extracting means, and the feature data extracted by said feature data extracting means, abnormality determining means for determining an abnormality when the distance is larger than a predetermined value, and outputting means for outputting the result of the determination when said abnormality determining means determines an abnormality.

The abnormal action detector described above may further comprise capturing means for capturing moving image frame data in real time, frame data preserving means for preserving the captured frame data, preserving means for preserving the feature data extracted from said feature data extracting means for a given period of time, and partial space updating means for finding a partial space based on principal component vectors derived from the feature data preserved in said preserving means through the principal component analysis approach to update partial space information.

An abnormal action detecting method according to the present invention is mainly characterized by comprising a first step of generating inter-frame differential data from moving image data composed of a plurality of image frame data, a second step of extracting feature data from the inter-frame differential data through higher-order local auto-correlation, a third step of calculating the distance between a partial space based on principal component vectors derived through a principal component analysis approach from a plurality of feature data extracted in the past, and the feature data, a fourth step of determining abnormality when the distance is larger than a predetermined value, and a fifth step of outputting the result of the determination when abnormality is determined.

Also, in the abnormal action detecting method described above, said first step may include the steps of capturing moving image frame data in real time, and preserving the captured frame data, and said third step may include the steps of preserving the feature data extracted by feature data extracting means for a given period of time, and finding a partial space based on principal component vectors derived from the preserved feature data through the principal component analysis approach to update partial space information.

## EFFECTS OF THE INVENTION

The present invention employs the (cubic) higher-order local auto-correlation features, which do not depend on the position and the like of the object and have values invariant to position, as action features. Taking advantage of the nature of additivity that when there are a plurality of objects, an overall feature value is the sum of individual feature values of the respective objects, normal actions available in abundance as normal data are statistically learned as a partial space, and abnormal actions are detected as deviations therefrom. In this way, when there are a plurality of persons on a screen, an abnormal action of even one person can be advantageously detected without extraction or tracking of the individual persons, which have been conventionally employed by most of schemes.

Also advantageously, a reduced amount of calculations is involved in the feature extraction and abnormality determination, the amount of calculations is constant irrespective of the number of intended persons, and the processing can be performed in real time.

Further, since normal actions are statistically learned without defining them as positive, no definition is required as to what normal actions are like at a designing stage, and a natural detection can be made in conformity to an object under monitoring. Further advantageously, since any assumption is not needed for an object under monitoring, a variety of objects under monitoring can be determined, not limited to actions of persons, whether they are normal or abnormal. Further advantageously, slow changes in normal actions can be tracked by capturing moving images in real time and updating the partial space of normal operations.

## BRIEF DESCRIPTION OF THE DRAWINGS

[Fig. 1]

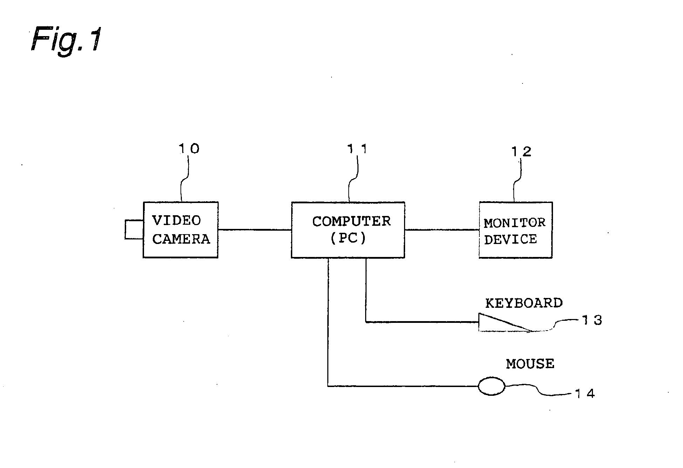

Fig. 1 is a block diagram illustrating the configuration of an abnormal action detector according to the present invention.
[Fig. 2]

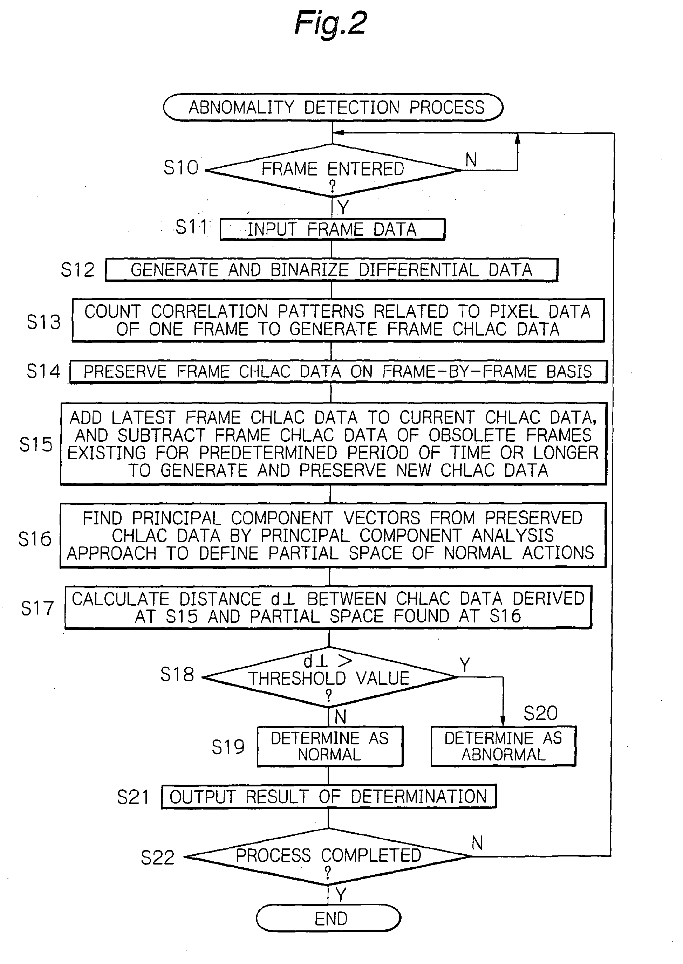

Fig. 2 is a flow chart illustrating details of an abnormal action detection process according to the present invention.
[Fig. 3]

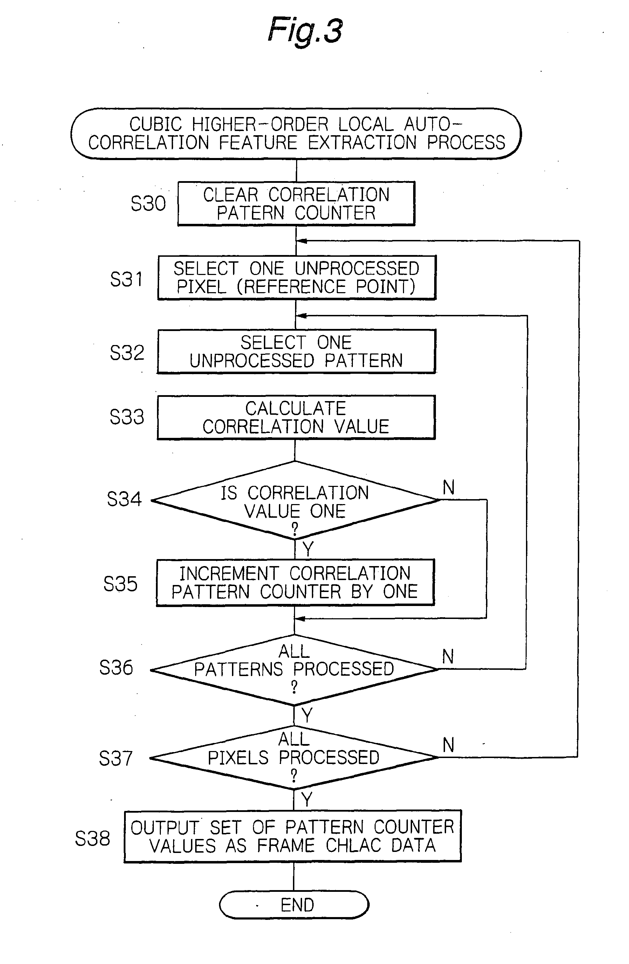

Fig. 3 is a flow chart illustrating details of a cubic higher-order local auto-correlation feature extraction process at S13.
[Fig. 4]

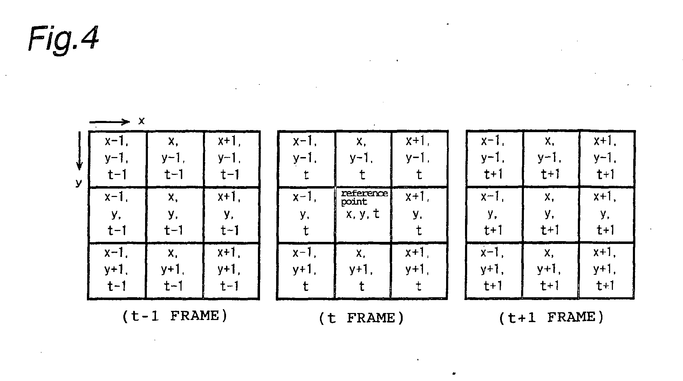

Fig. 4 is an explanatory diagram showing auto-correlation processing coordinates in a three-dimensional pixel space.
[Fig. 5]

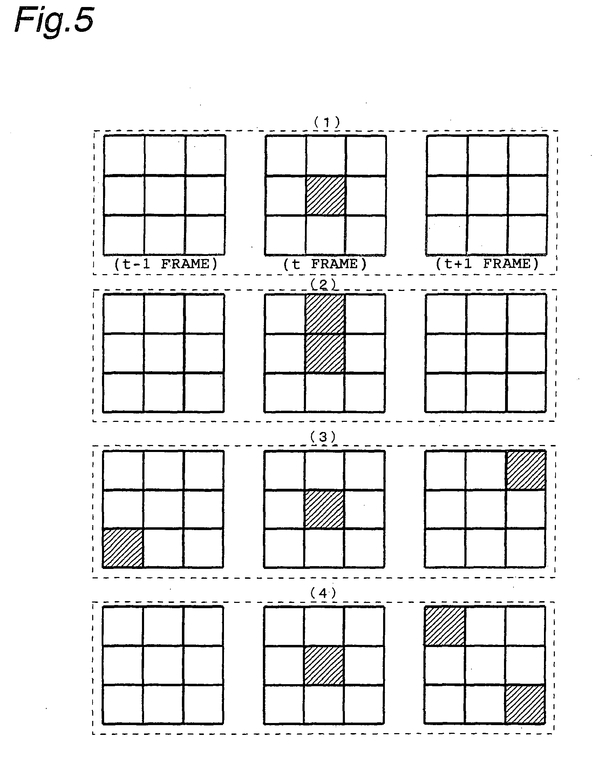

Fig. 5 is an explanatory diagram illustrating exemplary auto-correlation mask patterns.
[Fig. 6]

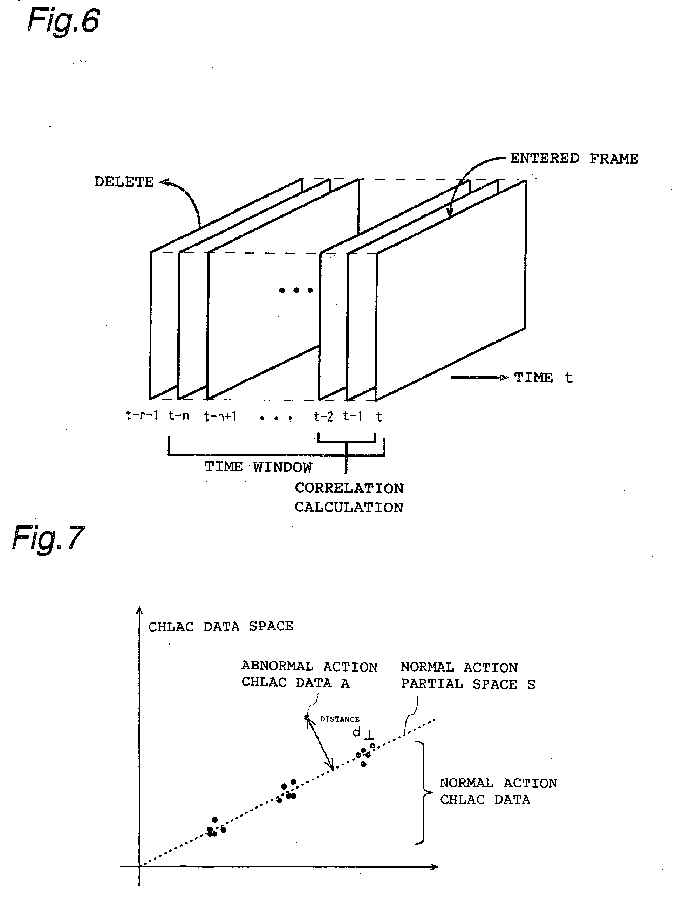

Fig. 6 is an explanatory diagram illustrating details of real-time motion image processing according to the present invention.
[Fig. 7]
Fig. 7 is an explanatory diagram showing the additivity of CHLAC features and the nature of a partial space.
[Fig. 8] .

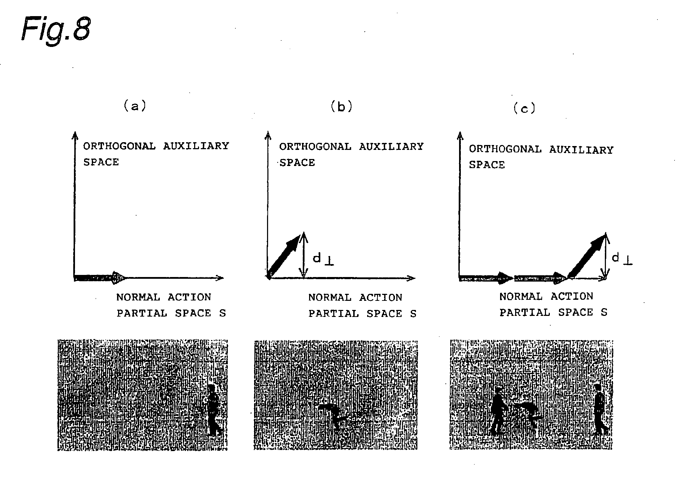

Fig. 8 is an explanatory diagram showing an example of the additivity of CHLAC features and the partial space.
Description of Reference Numerals

10 ...    Video Camera
11 ...    Computer
12 ...    Monitoring Device
13 ...    Keyboard
14 ...    Mouse

BEST MODE FOR CARRYING OUT THE INVENTION

First, in regard to the definition of "abnormal actions," abnormalities themselves cannot be defined in much the same fashion as all abnormal events cannot be enumerated. In this specification, accordingly, abnormal actions are defined to be "those which do not belong to normal actions." When the normal actions refer to those actions which concentrate in a statistical distribution of motion, features, they can be learned from the statistical distribution. Thus, the abnormal actions refer to those actions which largely deviate from the distribution.

For example, a security camera learns and recognizes general actions such as a walking action as normal actions, but recognizes suspicious actions as abnormal actions because they do not involve periodic motions such as the walking action and are hardly observed in distributions. In this connection, the inventors made experiments on the assumption that a "walking" action is regarded as normal, while a "running" action and a "falling" action as abnormal.

A specific approach for detecting abnormal actions involves generating a partial space of normal action features within an action feature space based on the cubic higher-order local auto-correlation features, and detecting abnormal actions using a distance from the partial space as an abnormal value. A principal component analysis approach is used in the generation of the normal action partial space, where a principal component partial space comprises, for example, a principal component vector which presents a cumulative contribution ratio of 0.99.

Here, the cubic higher-order local auto-correlation features have the nature of not requiring the segmentation of an object and exhibiting the additivity on a screen. Due to this additivity, in a defined normal action partial space, a feature vector falls within the normal action partial space irrespective of how many persons perform normal actions on a screen, but when even one of these persons performs an abnormal action, the feature vector extends beyond the partial space and can be detected as an abnormal value. Since persons need not be individually segmented and tracked for calculations, the amount of calculations is constant, not proportional to the number of intended persons, making it possible to make the calculations at high speeds.

The present invention finds principal component vectors of CHLAC features to be learned, and uses the principal component vectors to constitute a partial space, where the importance lies in that there is high compatibility with the additive nature of the CHLAC features. Belonging to a normal action partial space (the distance is equal to or smaller than a predetermined threshold value) does not depend on the magnitude of the vector. In other words, only the direction of the vector is a factor to determine the belonging to the normal action partial space or not.

Fig. 7 is an explanatory diagram showing the additivity of the CHLAC features and the nature of a partial space. For simplifying the description in Fig. 7, a CHLAC feature data space is two-dimensional (251-dimensions in actuality), and a partial space of normal actions is one-dimensional (in embodiments, around three to twelve dimensions with a cumulative contribution ratio being set equal to 0.99, by way of example), where CHLAC feature data of normal actions form groups of respective individuals under monitoring. A normal action partial space S found by a principal component analysis exists in the vicinity in such a form that it contains CHLAC feature data of normal actions. CHLAC feature data A of a deviating abnormal action presents a larger vertical distance $d\perp$ to the normal action partial space S, so that an abnormality is determined from this vertical distance $d\perp$.

Fig. 8 is an explanatory diagram showing an example of the additivity of the CHLAC features and the partial space. Fig. 8(a) shows a CHLAC feature vector associated with a normal action (walking) of one person, where the CHLAC feature vector is present in (in close proximity to) the normal action partial space S. Fig. 8(b) shows a CHLAC feature vector associated with an abnormal action (falling) of one person, where the CHLAC feature vector is spaced by the vertical distance $d\perp$ from the normal action partial space S.

Fig. 8(c) shows a CHLAC feature vector associated with a mixture of normal actions (walking) of two persons with an abnormal action (falling) of one person, where the CHLAC feature vector is likewise spaced by the vertical distance $d\perp$ from the normal action partial space, as is the case with (b). Generally, when normal actions of n persons mix with an abnormal action of one person, the following equation is given using a projector. In the equation, N represents normal, and A abnormal. The projector will be defined later.

[Equation 1]

$$\text{When } x = x_1^N + \cdots + x_n^N + x^A,$$

$$P_\perp x = P_\perp \left( x_1^N + \cdots + x_n^N + x^A \right)$$
$$= P_\perp \left( x_1^N + \cdots + x_n^N \right) + P_\perp x^A$$
$$= P_\perp x^A > 0$$

Embodiment 1

Fig. 1 is a block diagram illustrating the configuration of an abnormal action detector according to the present invention. A video camera 10 outputs moving image frame data of an objective person or device in real time. The video camera 10 may be a monochrome or a color camera. A computer 11 may be, for example, a well known personal computer (PC) which comprises a video capture circuit for capturing moving images. The present invention is implemented by creating a program, later described, installing the program into the well-known arbitrary computer 11 such as a personal computer, and running the program thereon.

A monitoring device 12 is a known output device of the computer 11, and is used, for example, in order to display a detected abnormal action to an operator. In this connection, methods which can be employed for informing and displaying detected abnormalities may include a method of informing and displaying abnormalities on a remote monitoring device through the Internet, a method of drawing attention through an audible alarm, a method of placing a call to a wired telephone or a mobile telephone to audibly inform abnormalities, and the like.
A keyboard 13 and a mouse 14 are known input devices for use by the operator for entry. In the embodiment, motion image data entered, for example, from the video camera 10 may be processed in real time, or may be once preserved in an image file and then sequentially read therefrom for processing.

Fig. 2 is a flow chart illustrating details of an abnormal action detection process according to the present invention. At S10, the process waits until frame data has been fully entered from the video camera 10. At S11, the frame data is input (read into a memory). In this event, image data is, for example, gray scale data at 256 levels.

At S12, "motion" information is detected from moving image data, and differential data is generated for purposes of removing still images such as the background. For generating the differential data, the process employs an inter-frame differential scheme which extracts a change in luminance between pixels at the same position in two adjacent frames, but may alternatively employ an edge differential scheme which extracts portions of a frame in which the luminance changes, or both. When each pixel has RGB color data, the distance between two RGB color vectors may be calculated as differential data between two pixels.

Further, the data is binarized through automatic threshold selection in order to remove color information and noise irrelevant to the "motion." A method which can be employed for the binarization may be a constant threshold, a discriminant least-square automatic threshold method disclosed in the following Non-Patent Document 2, or a zero-threshold and noise processing scheme (a method which regards all portions other than those having no difference in a contrast image as having motions (=1), and removes noise by a known noise removing method). The foregoing pre-processing transforms the input moving image data into a sequence of frame data (binary images), each of which has a pixel value equal to a logical value "1" (with motion) or "0" (without motion).
Non-Patent Document 2: Noriyuki Otsu, "Automatic Threshold Selection Based on Discriminant and Least-Squares Criteria," Transactions D of the Institute of Electronics, Information and Communication Engineers, J63-D-4, p348-356, 1980.

At S13, the process counts correlation patterns related to cubic pixel data on a frame-by-frame basis to generate frame CHLAC data corresponding to frames. As will be later described in greater detail, the process performs CHLAC extraction for generating 251-dimensional feature data. The cubic higher-order local auto-correlation (CHLAC) features are used for extracting action features from time-series binary differential data. N-the order CHLAC is expressed by the following Equation (2):

[Equation 2]

$$x_f^N(a_1, \cdots, a_N) = \int f(\gamma) f(\gamma + a_1) \cdots f(\gamma + a_N) d\gamma$$

where f represents a time-series pixel value (differential value), and a reference point (target pixel) r and N displacements $a_i$ (i=1, ..., N) viewed from the reference point are three-dimensional vectors which also has a time as a component in two-dimensional coordinates within a differential frame. Further, a range of integration in the time direction serves as a parameter indicative of an extent to which the correlation is taken in the time direction. However, the frame CHLAC data at S13 is data on a frame-by-frame basis, and is integrated (added) for a predetermined period of time in the time direction to derive the CHLAC feature data.

An infinite number of higher-order auto-correlation functions can be contemplated depending on displacement directions and an employed order number, and the higher-order local auto-correlation function refers to such a function which is limited to a local area. The cubic higher-order local auto-correlation features limit the displacement directions within a local area of 3x3x3 pixels centered at the reference point r, i.e., 26 pixels around the reference point r. In this connection, generally, the displacement directions in which the cubic higher-order local auto-correlation features are taken are not necessarily adjacent pixels, but may be spaced apart. In calculating a feature amount, an integrated value derived by Equation 1 for a set of displacement directions constitutes one feature amount. Therefore, feature amounts are generated as many as the number of combinations of the displacement directions (mask patterns).

The number of feature amounts, i.e, dimensions of feature vector is comparable to the types of mask patterns. With a binary image, one is derived by multiplying the pixel value "1" whichever number of times, so that terms of second and higher powers are deleted on the assumption that they are regarded as duplicates of a first-power term only with different multipliers. Also, in regard to the duplicated patterns resulting from the integration of Equation 1 (translation: scan), a representative one is maintained, while the rest is deleted. The right side of Equation 1 necessarily contains the reference point (f(r): the center of the local area), so that a representative pattern to be selected should include the center point and be exactly fitted in the local area of 3x3x3 pixels.

As a result, there are a total of 352 types of mask patterns which include the center points, i.e., mask patterns with one selected pixel: one, mask patterns with two selected pixels: 26, and mask patterns with three selected pixels: 26x25/2=325. However, with the exclusion of duplicated mask patterns resulting from the integration in Equation 1, there is a 251-dimensional cubic higher-order local auto-correlation feature vector for one three-dimensional data.

In a contrast image made up of multi-value pixels, for example, when a pixel value is represented by "a," a correlation value is a (zero-the order) ? axa (first order) ? axaxa (second order), so that duplicated patterns with different multipliers cannot be deleted even if they have the same selected pixels. Accordingly, two mask patterns are added to those associated with the binary image when one pixel is selected, and 26 mask patterns are added when two pixels are selected, so that there are a total of 279 types of mask patterns.

The cubic higher-order local auto-correlation features have an additive nature to data because the displacement directions are limited within a local area, and also have data position invariance because a whole cubic data area is integrated including a whole screen and time. Further, the cubic higher-order local auto-correlation features are robust to noise because the auto-correlation is taken.

At S14, the frame CHLAC data is preserved on a frame-by-frame basis. At S15, the latest frame CHLAC data calculated at S13 is added to the current CHLAC data, and frame CHLAC data corresponding to frames which have existed for a predetermined period of time or longer are subtracted from the current CHLAC data to generate new CHLAC data which is then preserved.

Fig. 6 is an explanatory diagram illustrating details of moving image real-time processing according to the present invention. Data of moving images are in the form of sequential frames. As such, a time window having a constant width is set in the time direction, and a set of frames within the window is designated as one three-dimensional data. Then, each time a new frame is entered, the time window is moved, and an obsolete frame is deleted to produce finite three-dimensional data. The length of the time window is preferably set to be equal to or longer than one period of an action which is to be recognized.

Actually, only one frame of the image frame data is preserved for taking a difference, and the difference is taken between the one frame and next entered image frame data. Only two frames of differential frame data are preserved, such that frame CHLAC data is generated from three frames of differential frames, including differential frame data based on next entered image frame data. Then, the frame CHLAC data corresponding to the frames are preserved only for the time window. Specifically, in Fig. 6, at the time a new frame is entered at time t, frame CHLAC data corresponding to the preceding time windows (t-1, t-n-1) have been already calculated. Notably, three immediately adjacent differential frames are required for calculating frame CHLAC data, but since a (t-1) frame is located at the end, the frame CHLAC data are calculated up to that corresponding to a (t-2) frame.

Thus, frame CHLAC data corresponding to the (t-1) frame is generated using t newly entered frames and added to the CHLAC data. Also, frame CHLAC data corresponding to the most obsolete (t-n-1) frame is subtracted from the CHLAC data. CHLAC feature data corresponding to the time window is updated through such processing.

Turning back to Fig. 2, at S16, main vector components are found from all CHLAC data so far preserved or a predetermined number of preceding data by a principal component analysis approach, and is defined to be a partial space of normal actions. The principal component analysis approach per se is well known and will therefore be described in brief.

First, for defining the partial space of normal actions, principal component vectors are found from the CHLAC feature data by a principal component analysis. An M-dimensional CHLAC feature vector x is expressed in the following manner:

## [Equation 3]

$$x_i \in V^M \left( i = 1, \cdots, N \right)$$

where M=251. Also, the principal component vectors (eigenvectors) are arranged in a row to generate a matrix U expressed in the following manner:

## [Equation 4]

$$U = \left[ u_1, \cdots u_M \right] u_j \in V^M \left( j = 1, \cdots, M \right)$$

where M=251. The matrix U which has the principal component vectors arranged in a row is derived in the following manner. A covariance matrix $\Sigma$ is expressed by the following equation:

## [Equation 5]

$$\sum_X = \mathop{E}_{i=1}^{N} \left\{ (x_i - \mu)(x_i - \mu)^T \right\}$$

where $\mu$ represents an average vector of feature vectors x, E an operator symbol for calculating an expected value (E= (1/N)$\Sigma$). The matrix U is derived from an eigenvalue problem expressed by the following equation using the covariance matrix $\Sigma$.

## [Equation 6]

$$\sum_X U = U\Lambda$$

When a diagonal matrix A of eigenvalues is expressed by the following equation,

**[Equation 7]**

$$\Lambda = diag\left(\lambda_1, \cdots, \lambda_M\right)$$

a cumulative contribution ratio $\eta_k$ up to a K-th eigenvalue is expressed in the following manner:
**[Equation 8]**

$$\eta_K = \frac{\sum_{i=1}^{K} \lambda_i}{\sum_{i=1}^{M} \lambda_i}$$

Now, a space defined by eigenvectors $u_1$, ..., $u_k$ up to a dimension in which the cumulative contribution ratio $\eta k$ reaches a predetermined value (for example, $\eta_k$ =0.99) is applied as the partial space of normal actions. It should be noted that an optimal value for the cumulative contribution ratio $\eta k$ is determined by an experiment or the like because it may depend on an object under monitoring and a detection accuracy. The partial space of normal actions is generated by performing the foregoing calculations.

At S17, a vertical distance d⊥ is calculated between the CHLAC feature data derived at S15 and the partial space found at S16. A projector P to the partial space defined by a resulting principal component orthogonal base $U_k$ = [$u_1$, ..., $u_k$], and a projector P⊥ to an orthogonal ortho-complement subspace to that are expressed by:
**[Equation 9]**

$$P = U_K U_K'$$
$$P_\perp = I_M - P$$

where U' is a transposed matrix of the matrix U, and $I_M$ is a M-th order unit matrix. A square distance in the orthogonal auxiliary space, i.e., a square distance $d^2⊥$ of a normal to the partial space U can be expressed by:
**[Equation 10]**

$$d_\perp^2 = \left\| P_\perp x \right\|^2$$
$$= \left\| \left(I_M - U_K U_K'\right) x \right\|^2$$
$$= x'\left(I_M - U_K U_K'\right)'\left(I_M - U_K U_K'\right) x$$
$$= x'\left(I_M - U_K U_K'\right) x$$

In this embodiment, this vertical distance d⊥ is used as an index indicative of whether or not an action is normal.

At S18, it is determined whether or not the vertical distance d⊥ is larger than a predetermined threshold value, and the process goes to S19 when the result of the determination is negative, whereas the process goes to S20 when the result is affirmative. At S19, the action of this frame is determined to be normal. At S20, in turn, the action of this frame is determined to be abnormal. At S21, the result of the determination is output to a monitoring device or the like. At S22, it is determined whether or not the process should be terminated, for example, in accordance with whether or not an ending manipulation by the operator is detected. When the result of the determination is negative, the process returns to S10, whereas the process is terminated when affirmative. With the foregoing method, abnormal actions can be detected in real time.

Fig. 3 is a flow chart illustrating details of the cubic higher-order local auto-correlation feature extraction process at S13. At S30, 251 correlation pattern counters are cleared. At S31, one of unprocessed target pixels (reference points) is selected (by scanning the target pixels in order within a frame). At S32, one of unprocessed mask patterns is selected.

Fig. 4 is an explanatory diagram showing auto-correlation processing coordinates in a three-dimensional pixel space. Fig. 4 shows xy-planes of three differential frames, i.e., (t-1) frame, t frame, (t+1) frame side by side.

The present invention correlates pixels within a cube composed of 3x3x3 (=27) pixels centered at a target pixel. A mask pattern is information indicative of a combination of the pixels which are correlated. Data on pixels selected by the mask pattern is used to calculate a correlation value, whereas pixels not selected by the mask pattern is neglected. As mentioned above, the target pixel (center pixel) is selected by the mask pattern without fail. Considering zero-th order to second order correlation values in a binary image, there are 251 patterns after duplicates are eliminated from a cube of 3x3x3 pixels.

Fig. 5 is an explanatory diagram illustrating examples of auto-correlation mask patterns. Fig. 5(1) is the simplest zero-th order mask pattern which comprises only a target pixel. (2) is an exemplary first-order mask pattern for selecting two hatched pixels. (3), (4) are exemplary second-order mask patterns for selecting three hatched pixels. Other than those, there are a multiplicity of patterns.

Turning back to Fig. 3, at S33, the correlation value is calculated using the aforementioned Equation 1. $f(f)f(r+a_1) ... f(r+a_N)$ in Equation 2 is comparable to a multiplication of pixel values of differential binarized three-dimensional data at corresponding coordinates corresponding to a mask pattern. On the other hand, the integration in Equation 1 is comparable to the addition of correlation values by a counter corresponding to a mask pattern by moving (scanning) target pixels within a frame.

At S34, it is determined whether or not the correlation value is one. The process goes to S35 when the result of the determination is affirmative, whereas the process goes to S46 when negative. It should be noted that in the actual calculation, it is first determined after S31 whether or not the pixel value at the reference point is one before the correlation value is calculated at S33 in order to reduce the amount of calculations, and the process jumps to S37 when the pixel value is zero because zero will result from the calculation of the correlation. At S35, the correlation pattern counter corresponding to the mask pattern is incremented by one. At S36, it is determined whether or not all patterns have been processed. The process goes to S37 when the result of the determination is affirmative, whereas the process goes to S32 when negative.

At S37, it is determined whether or not all pixels have been processed. The process goes to S38 when the result of the determination is affirmative, whereas the process goes to S31 when negative. At S38, a set of pattern counter values are output as 251-dimensional frame CHLAC data.

Next, a description will be given of the result of an experiment made by the inventors. Image data used in the experiment was a moving image in which a plurality of persons went back and forth. This moving image is composed of several thousands of frames, and includes images of a "falling" action, which is an abnormal action, in an extremely small number of frames. It was confirmed from the result of the experiment that a new sample image always protruded into a different dimension to result in a slightly large value of the vertical distance d⊥ until the dimensions of the partial space of normal actions were stabilized, but at the midpoint where a certain amount of feature data were accumulated, the vertical distance d⊥ remained stable at small values for images of normal actions, while the value of the vertical distance d⊥ increased only in the "falling" frames, which represented an abnormal action, so that the abnormal action could be correctly detected. It should be noted that the dimensions of the normal action partial space is always changing approximately over as small as four dimensions.

As described above, in the embodiment, normal actions are statistically learned as a partial space, using the additivity of the CHLAC features and the partial space method, such that abnormal actions can be detected as deviations therefrom. This approach can also be applied to a plurality of persons, where if even one person presents an abnormal action within a screen, this abnormal action can be detected. Moreover, no object need be extracted, and the amount of calculation is constant irrespective of the number of persons, thus making the approach effective and highly practical. Also, since this approach statistically learns normal actions without defining them as positive, no definition is required as to what normal actions are like at a designing stage, and a natural detection can be made in conformity to an object under monitoring. Further, since any assumption or knowledge is needed for an object under monitoring, this is a generic approach which can determine a variety of objects under monitoring, not limited to actions of persons, whether they are normal or abnormal. Also, abnormal actions can be detected in real time through on-line learning.

While the embodiment has been described in connection with the detection of abnormal actions, the following variations can be contemplated in the present invention by way of example. While the embodiment has disclosed an example in which abnormal actions are detected while updating the partial space of normal actions, the partial space of the normal actions may have been previously generated by a learning phase, or the partial space of normal actions may be generated and updated at a predetermined period longer than a frame interval, for example, at intervals of one minute, one hour or one day, such that a fixed partial space may be used to detect abnormal actions until the next update. In this way, the amount of processing is further reduced.

Further, a learning method for updating the partial space in real time employed herein may be a method of approximately finding eigenvectors from input data in sequence without solving an eigenvalue problem through the principal component analysis, as disclosed in the following Non-Patent Document 3:

Non-Patent Document 3: Juyang Weng, Yuli Zhang and Wey-Shiuan Hwang, "Candid Covariance-Free Incremental Principal Component Analysis," IEEE Transactions on Pattern Analysis and Machine Intelligence, Vol. 25, No. 8, pp.1034-1040, 2003.

When normal actions exist in a plurality of patterns, the configuration of the embodiment can fail to highly correctly define the normal action partial space, resulting in a lower detection accuracy of abnormal actions. Accordingly, it is contemplated that the normal action partial space is clustered as well, and then the distance is measured therefrom, such that a multimodal distribution can also be supported.

Alternatively, when partial spaces can be generated for a plurality of normal action patterns, respectively, a plurality of abnormality determinations may be made using the respective partial spaces, the results of the plurality of determinations are logically ANDed to determine an abnormality when all patterns are determined as abnormal.

While the embodiment uses even frames determined as abnormal actions in the generation of the partial space of normal actions, the frames determined as abnormal actions may be excluded from the generation of the partial space. In this way, the detection accuracy is increased when abnormal actions are present at a high proportion, or when there are a small number of image samples, or the like.

While the embodiment has disclosed an example of calculating three-dimensional CHLAC, two-dimensional higher-order local auto-correlation features may be calculated from each differential frame, instead of three-dimensional CHLAC, to generate a partial space of normal operations from the resulting data to detect abnormal actions. In doing so, abnormal actions can be still detected in periodic actions such as walking, though errors are increased due to the lack of integration in the time direction. Since the resulting data has 25 dimensions instead of 251-dimensional CHLAC, calculations can be largely reduced. This is therefore effective depending on applications.

**Claims**

1.   An abnormal action detector **characterized by** comprising:

   differential data generating means for generating inter-frame differential data from moving image data composed of a plurality of image frame data;
   feature data extracting means for extracting feature data from the inter-frame differential data through higher-order local auto-correlation;
   distance calculating means for calculating a distance between a partial space based on principal component vectors derived through a principal component analysis approach from a plurality of feature data extracted in the past by said feature data extracting means, and the feature data extracted by said feature data extracting means;
   abnormality determining means for determining an abnormality when the distance is larger than a predetermined value; and
   outputting means for outputting a determined result when said abnormality determining means determines an abnormality.

2.   An abnormal action detector according to claim 1, wherein said feature data extracting means extracts the feature data from three-dimensional data including a plurality of the inter-frame differential data immediately adjacent to one another through cubic higher-order local auto-correlation.

3.   An abnormal action detector according to claim 2, further comprising:

   capturing means for capturing moving image frame data in real time;
   frame data preserving means for preserving the captured frame data;

preserving means for preserving the feature data extracted from said feature data extracting means for a given period of time; and

partial space updating means for finding a partial space based on principal component vectors derived from the feature data preserved in said preserving means through the principal component analysis approach to update partial space information.

4. An abnormal action detecting method comprising:

a first step of generating inter-frame differential data from moving image data composed of a plurality of image frame data;

a second step of extracting feature data from the inter-frame differential data through higher-order local auto-correlation;

a third step of calculating the distance between a partial space based on principal component vectors derived through a principal component analysis approach from a plurality of feature data extracted in the past, and the feature data;

a fourth step of determining abnormality when the distance is larger than a predetermined value; and

a fifth step of outputting a determined result when abnormality is determined.

5. An abnormal action detecting method according to claim 4, wherein:

said first step includes the steps of capturing moving image frame data in real time, and preserving the captured frame data, and

said third step includes the steps of preserving the feature data extracted by feature data extracting means for a given period of time, and finding a partial space based on principal component vectors derived from the preserved feature data through the principal component analysis approach to update partial space information.

## Fig.1

```
        10              11              12
         │               │               │
    ┌─────────┐     ┌─────────┐     ┌─────────┐
┌───┤ VIDEO   ├─────┤COMPUTER ├─────┤ MONITOR │
└───┤ CAMERA  │     │  (PC)   │     │ DEVICE  │
    └─────────┘     └────┬────┘     └─────────┘
                         │
                              KEYBOARD
                                            ──13
                         
                               MOUSE
                                            ──14
```

## Fig.2

```
      ( ABNOMALITY DETECTION PROCESS )
                      │◄──────────────────────────┐
                      ▼                            │
 S10 ◄───── FRAME ENTERED ──────── N ──────►───────┤
               ?                                   │
               │Y                                  │
 S11   │ INPUT FRAME DATA │                         │
                      │                            │
 S12 │ GENERATE AND BINARIZE DIFFERENTIAL DATA │    │
                      │                            │
 S13 │ COUNT CORRELATION PATTERNS RELATED TO PIXEL DATA │
     │    OF ONE FRAME TO GENERATE FRAME CHLAC DATA │
                      │                            │
 S14 │ PRESERVE FRAME CHLAC DATA ON FRAME-BY-FRAME BASIS │
                      │                            │
     │ ADD LATEST FRAME CHLAC DATA TO CURRENT CHLAC DATA, │
 S15 │ AND SUBTRACT FRAME CHLAC DATA OF OBSOLETE FRAMES │
     │ EXISTING FOR PREDETERMINED PERIOD OF TIME OR LONGER │
     │    TO GENERATE AND PRESERVE NEW CHLAC DATA │
                      │                            │
     │ FIND PRINCIPAL COMPONENT VECTORS FROM PRESERVED │
 S16 │    CHLAC DATA BY PRINCIPAL COMPONENT ANALYSIS │
     │ APPROACH TO DEFINE PARTIAL SPACE OF NORMAL ACTIONS │
                      │                            │
 S17 │ CALCULATE DISTANCE d⊥ BETWEEN CHLAC DATA DERIVED │
     │    AT S15 AND PARTIAL SPACE FOUND AT S16 │
                      │                            │
                      ▼                            │
 S18 ◄────── d⊥ > THRESHOLD VALUE ──── Y ───┐       │
                  ?                          │       │
                  │N                         ▼       │
 S19   │ DETERMINE AS │           S20 │ DETERMINE AS │
       │   NORMAL     │               │  ABNORMAL    │
                  │◄─────────────────────┘           │
                  ▼                                  │
 S21 │ OUTPUT RESULT OF DETERMINATION │              │
                  │                                  │
                  ▼                                  │
 S22 ◄────── PROCESS COMPLETED ──────── N ──────────┘
                  ?
                  │Y
             (  END  )
```

Calculate distance $d\perp$ between CHLAC data derived at S15 and partial space found at S16

$d\perp >$ THRESHOLD VALUE ?

# Fig.3

```
┌─────────────────────────────────────────┐
│   CUBIC HIGHER-ORDER LOCAL AUTO-         │
│ CORRELATION FEATURE EXTRACTION PROCESS   │
└─────────────────────────────────────────┘
```

S30 — CLEAR CORRELATION PATERN COUNTER

S31 — SELECT ONE UNPROCESSED PIXEL (REFERENCE POINT)

S32 — SELECT ONE UNPROCESSED PATTERN

S33 — CALCULATE CORRELATION VALUE

S34 — IS CORRELATION VALUE ONE ? — N

Y

S35 — INCREMENT CORRELATION PATTERN COUNTER BY ONE

S36 — ALL PATTERNS PROCESSED ? — N

Y

S37 — ALL PIXELS PROCESSED ? — N

Y

S38 — OUTPUT SET OF PATTERN COUNTER VALUES AS FRAME CHLAC DATA

END

## Fig.4

| x-1, y-1, t-1 | x, y-1, t-1 | x+1, y-1, t-1 |
|---|---|---|
| x-1, y, t-1 | x, y, t-1 | x+1, y, t-1 |
| x-1, y+1, t-1 | x, y+1, t-1 | x+1, y+1, t-1 |

(t-1 FRAME)

| x-1, y-1, t | x, y-1, t | x+1, y-1, t |
|---|---|---|
| x-1, y, t | reference point x, y, t | x+1, y, t |
| x-1, y+1, t | x, y+1, t | x+1, y+1, t |

(t FRAME)

| x-1, y-1, t+1 | x, y-1, t+1 | x+1, y-1, t+1 |
|---|---|---|
| x-1, y, t+1 | x, y, t+1 | x+1, y, t+1 |
| x-1, y+1, t+1 | x, y+1, t+1 | x+1, y+1, t+1 |

(t+1 FRAME)

## Fig.5

(1)

(t-1 FRAME)  (t FRAME)  (t+1 FRAME)

(2)

(3)

(4)

## Fig.6

DELETE ←⁓    ENTERED FRAME

t-n-1  t-n  t-n+1  . . .  t-2  t-1  t  → TIME t

TIME WINDOW

CORRELATION
CALCULATION

## Fig.7

CHLAC DATA SPACE

ABNORMAL ACTION    NORMAL ACTION
CHLAC DATA A       PARTIAL SPACE S

DISTANCE
$d_\perp$

NORMAL ACTION
CHLAC DATA

*Fig.8*

(a)                              (b)                              (c)

ORTHOGONAL AUXILIARY          ORTHOGONAL AUXILIARY          ORTHOGONAL AUXILIARY
SPACE                         SPACE                         SPACE

$d_\perp$                                                   $d_\perp$

NORMAL ACTION                 NORMAL ACTION                 NORMAL ACTION
PARTIAL SPACE S               PARTIAL SPACE S               PARTIAL SPACE S

## INTERNATIONAL SEARCH REPORT

| | International application No. |
|---|---|
| | PCT/JP2005/016380 |

| A. CLASSIFICATION OF SUBJECT MATTER |
|---|
| *G06T7/20* (2006.01) |

According to International Patent Classification (IPC) or to both national classification and IPC

| B. FIELDS SEARCHED |
|---|
| Minimum documentation searched (classification system followed by classification symbols) |
| *G06T7/20* (2006.01) |

Documentation searched other than minimum documentation to the extent that such documents are included in the fields searched

| | | | |
|---|---|---|---|
| *Jitsuyo Shinan Koho* | 1922-1996 | *Jitsuyo Shinan Toroku Koho* | 1996-2005 |
| *Kokai Jitsuyo Shinan Koho* | 1971-2005 | *Toroku Jitsuyo Shinan Koho* | 1994-2005 |

Electronic data base consulted during the international search (name of data base and, where practicable, search terms used)
  IEEE, JOIS

### C. DOCUMENTS CONSIDERED TO BE RELEVANT

| Category* | Citation of document, with indication, where appropriate, of the relevant passages | Relevant to claim No. |
|---|---|---|
| A | T. KOBAYASHI et al., Action and Simultaneous Multiple-Person Identification Using Cubic Higher-order Local Auto-Correlation, Proceedings of the 17th International Conference on Pattern Recognition (ICPR '04), 2004 | 1-5 |
| A | Yosuke YAMADA et al., "Koji Kyokusho Jiko Sokan Tokucho to Hanbetsu Bunseki ni yoru Kao Gazo no Hyojo Ninshiki", ITE Technical Report, 2003 Nen 2 Gatu Kaisaibun (first volume), Vol.27, No.8, The Institute of Image Information and Television Engineers, 03 February, 2003 (03.02. 03), pages 145 to 148 | 1-5 |

| ☐ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 October, 2005 (03.10.05) | 25 October, 2005 (25.10.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. KOBAYASHI ; N. OTSU.** Action and Simultaneous Multiple-Person Identification Using Cubic Higher-Order Local Auto-Correlation. *Proceeding of 17th International Conference on Pattern Recognition,* 2004
- **NORIYUKI OTSU.** Automatic Threshold Selection Based on Discriminant and Least-Squares Criteria. *Transactions D of the Institute of Electronics, Information and Communication Engineers,* 1980, vol. J63-D-4, 348-356

- **JUYANG WENG ; YULI ZHANG ; WEY-SHIUAN HWANG.** Candid Covariance-Free Incremental Principal Component Analysis. *IEEE Transactions on Pattern Analysis and Machine Intelligence,* 2003, vol. 25 (8), 1034-1040